# EUROPÄISCHE PATENTSCHRIFT

(11) **EP 1 141 437 B1**
(45) Veröffentlichungstag und Bekanntmachung des Hinweises auf die Patenterteilung: **01.10.2003**
(21) Anmeldenummer: 99960901.9
(22) Anmeldetag: 09.11.1999
(51) Int. Cl.: C23C 4/06, C23C 28/00

(54) **WÄRMEDÄMMENDE GLAS-METALL/KERAMIK-SCHICHTEN**
HEAT-INSULATING GLASS-METAL/CERAMIC LAYERS
COUCHES VERRE-METAL/CERAMIQUE D'ISOLATION THERMIQUE

(30) Priorität: 13.11.1998 DE 19852285
(43) Veröffentlichungstag der Anmeldung: 10.10.2001
(73) Patentinhaber: Forschungszentrum Jülich GmbH, 52425 Jülich (DE)
(72) Erfinder: VERLOTSKI, Vadim, D-44894 Bochum (DE); STÖVER, Detlev, D-52382 Niederzier (DE); BUCHKREMER, Hans, Peter, D-52525 Heinsberg (DE); VASSEN, Robert, NL-6291 HA Vaals (NL)
(86) Internationale Anmeldenummer: DE9903599
(87) Internationale Veröffentlichungsnummer: WO00029634

(56) Entgegenhaltungen:
- US-A- 4 330 575
- US-A- 5 320 909
- PATENT ABSTRACTS OF JAPAN vol. 1995, no. 07, 31. August 1995 (1995-08-31) & JP 07 090619 A (TOSHIBA CORP), 4. April 1995 (1995-04-04)

## Beschreibung

Die Erfindung betrifft wärmedämmende Schichten auf einem Substrat sowie eine Verwendungsweise.

Bekannt sind aus YSZ bestehende wärmedämmende Schichten. Zwischen einem metallischen Substrat und der wärmedämmenden Schicht befindet sich regelmäßig eine zum Beispiel aus einer MCrAlY-Legierung bestehende Zwischenschicht, die unter der Bezeichnung "Bondcoat" bekannt ist. Beispiele für Substrate sind luftgekühlte aus Ni-Superlegierungen bestehende Gasturbinenteile, - schaufeln sowie Platten von Brennkammern.

Aus yttriumstabilisiertem Zirkoniumoxid (YSZ) und MCrA-lY (M: Ni, Co, Fe oder gemischt) bestehende Mehrfachschichtsysteme werden auf Substratoberflächen aus Ni-Superlegierungen durch Plasmaspritzen (VPS und APS) oder durch EB-PVD- Verfahren aufgebracht, wie der Druckschrift US 4,055,705 zu entnehmen ist. Diese schützen Substrate vor hohen Temperaturen und Oxidation.

Wärmedämmende Schichten für Gasturbinen ermöglichen eine Erhöhung des Wirkungsgrades, da der Verbrauch von Kühlluft gesenkt werden kann. Ferner sind erhöhte Brenntemperaturen möglich, wodurch der Ausstoß von Schadstoffen reduziert wird. Wärmedämmende Schichten können zu niedrigeren Substrattemperaturen führen und so die Lebensdauer eines Substrats steigern.

Nachteilhaft sind die bekannten aus YSZ bestehenden Schichten für Sauerstoff durchlässig. Die darunter liegende Schicht oxidiert. Der Druckschrift "W. Beele, N. Czesh, W.J. Quadakkers, W. Stamm. Long-term. Oxidations tests on a Re- containing MCrAlY coating. Surface and Coatings Technology, 94-95 (1997), 41-45" ist zu entnehmen, daß mechanische Zerstörungen die Folge sind.

Problematisch sind ferner große Unterschiede zwischen Wärmeausdehnungskoeffizienten (α) von metallischen Substraten und YSZ- wärmedämmenden Schichten. Temperaturänderungen bewirken daher zerstörerisch wirkende mechanische Spannungen, wie der Druckschrift "J.T. De Masi, K.D. Sheffler, S. Bose, Mechanismus of Degradation and Failure in a Plasma- Deposited Thermal Barrier Coating, j. Eng. Gas Turbines Power, vol. 112, Ost. 1990, 521-526" entnommen werden kann. Zur Lösung des Problems wurden Herstellungsverfahren vorgeschlagen, die eine gewisse Nachgiebigkeit (Toleranz) der YSZ- Keramik erreichten.

Es wurde eine keramische, wärmedämmende Schicht mit Mikrorissen entwickelt, bei der sich Risse im wesentlichen senkrecht zur Oberfläche verbreiten. Thermische Spannungen werden so kompensiert (UK 2 100 621 A.; US 4,377,371, W091/05888, US 5,169,689).

Alternativ wurden zur Vermeidung von thermischen Spannungen YSZ- wärmedämmende Schichten mit sogenannter Säulenstruktur geschaffen. Eine solche Schicht besteht aus mehreren dünnen Säulen, die voneinander durch dünne Risse getrennt sind (US 4,321,310, US 4,321,311, US 4,401,697, US 4,405,659, W092/0598). Eine gute Haftung zwischen den Säulen und der darunter befindlichen Schicht wurde durch Vorsehen einer weiteren Al₂O₃- Zwischenschicht erreicht (US 4,880,614). Außerdem wurde für eine Verbesserung der Haftung modifizierte Zwischenschichten verwendet, denen Hf und Si zugesetzt wurde (W092 / 0598).

Wärmedämmende Schichten mit Säulenstruktur oder senkrechten Rissen sind wenig porös. Die Wärmeleitfähigkeit wird so unerwünscht gesteigert.

Zur Lösung dieses Problems wurde vorgeschlagen (EP 0 605 196 A1), auf eine YSZ-Schicht mit einer Säulenstruktur eine obere YSZ-Schicht ohne Säulenstruktur aufzuspritzen.

In allen vorgenannten Druckschriften wurde betont, dass YSZ- wärmedämmende Schichten das Substrat nur vor hohen Temperaturen, nicht aber vor einer Oxidation schützen. Ein Oxidationsschutz des Substrates ist in allen Fällen nur durch die Zwischenschicht möglich.

Aus JP-A-07090619 ist ein Schichtsystem bekannt, in dem eine Matrix mit einer hitzebeständigen Oberfläche aus einer Legierung versehen ist. Eine Zwischenschicht mit einer Keramik, die zumindest ein Glas formendes Oxid umfasst, ist dabei zwischen der Matrix und einer weiteren thermischen Isolationsschicht, die eine hitzebeständige metallische Schicht umfasst, und einer Abschlussschicht, bestehend aus einer Keramik, angeordnet.

US-A-433,057,5 offenbart die Aufbringung von Überzügen, die zu einer Erhöhung der Betriebstemperaturen, bei welchen die Bauteile von Gasturbinentriebwerken funktionieren müssen, führen.

Nachteilig sind die genannten Schichten komplex aufgebaut und erfüllen nicht die Anforderung bei Temperaturen oberhalb von 1000 °C wärmedämmend zu sein und vor Oxidation zu schützen.

Aufgabe der Erfindung ist die Schaffung wärmedämmender Schichten auf einem Substrat, die oberhalb von 1000 °C nicht nur über eine wärmedämmende Wirkung verfügen, sondern auch vor Oxidation schützen.

Die Aufgabe wird durch ein Substrat mit den Merkmalen des Anspruchs 1 gelöst. Vorteilhafte Ausgestaltungen ergeben sich aus den Unteransprüchen. Die Aufgabe wird durch ein Substrat gelöst, auf der eine wärmedämmende Schicht aufgebracht ist. Die wärmedämmende Schicht besteht zu 10-90 Masse-% aus Glas und darüber hinaus aus einer Keramik, einem Metall und/oder einer Metalllegierung. Geeignet sind Keramiken wie YSZ, nicht stabilisiertes ZrO₂ oder Al₂O₃ sowie Metalle/Metalllegierungen wie MCrAlY, Ni, Cr, Co, Fe oder Legierungen aus den vorgenannten Elementen. Glas verfügt zwar über sehr gute wärmedämmende Eigenschaften. Es ist jedoch für den bezweckten Einsatz nicht hinreichend schockbeständig und daher als alleiniger Werkstoff nicht geeignet. Die anspruchsgemäße Mischung erfüllt beide Anforderungen. Auch kann durch eine geeignete Zusammensetzung der Ausdehnungskoeffizient an den Ausdehnungskoeffizienten eines metallischen Substrates angepaßt werden. Thermisch bedingte Spannungen werden so vermieden.
Die wärmedämmende Schicht ist für Sauerstoff undurchlässig. Sie dient also im Unterschied zum eingangs genannten Stand der Technik auch dem Schutz vor Oxidation. Die mechanische Stabilität wird so gefördert.
Das anspruchsgemäße Substrat mit der wärmedämmenden Schicht ist insbesondere für Substrate aus Ni-Superlegierungen und ihre Verwendung in Gasturbinen entwickelt worden. Selbstverständlich ist das Einsatzgebiet hierauf nicht beschränkt. Anspruchsgemäße wärmedämmende Schichten auf Substraten werden regelmäßig bei Bauteilen vorteilhaft eingesetzt, die hohen, auf das Substrat zerstörerisch wirkenden Temperaturen ausgesetzt sind.

Das Glas gewährleistet eine Verminderung der Gasdurchlässigkeit (Sauerstoffdurchlässigkeit) der Keramik-Glas- und Metall-Glas-Zusammensetzungen bei normalen und besonders bei hohen Temperaturen durch Bildung einer gasdichten Glasmatrix. Im Fall einer Metall-Glas-Zusammensetzung schützt die Glasmatrix (gasdichte Glasfilme auf Oberflächen der Metallteilchen) den Metallanteil vor der Oxidation.
Die Glasphase gewährleistet eine gute Haftung der Keramik-Glas- und Metall-Glas-Zusammensetzungen auf metallischen und keramischen Oberflächen dank benetzender Wirkung der Gläser.
Das Glas (Glasmatrix) führt bei Temperaturen ab 400-600°C und relativ niedrigen Belastungen zu kriechfähigen Eigenschaften der Zusammensetzung. Thermisch bedingte Spannungen können aufgrund der Kriechfähigkeit abgebaut werden. Außerdem relaxiert die Glasphase mögliche Restspannungen, die sich bei Herstellung, z. B. beim Plasmaspritzen, entwickeln können. Glas mit einem Anteil von nur 10 Masse-% ermöglicht es, als zusätzlichen Werkstoff zum Beispiel nicht stabilisiertes ZrO₂ einzusetzen. Das Glas kompensiert nämlich ohne Rissbildung sämtliche Volumenänderungen des ZrO₂ bei Phasenumwandlungen.

Eine Zwischenschicht ist vorgesehen.

Es ist weiter darauf zu achten, dass der Ausdehnungskoeffizient des Substrates zwischen den Ausdehnungskoeffizienten von zwei Materialien liegt, aus dem die wärmedämmende Schicht hergestellt wird. Grundsätzlich kann die wärmedämmende Schicht auch aus mehr als zwei Materialien bestehen.
Bevorzugt werden Silikatgläser in der wärmedämmenden Schicht vorgesehen. Die Wärmeleitfähigkeit von Silikatgläsern liegt bei normaler Temperatur zwischen 0,6 und 1,5 Wm⁻¹K⁻¹. Dank dieser niedrigen Wärmeleitfähigkeit des Glases liegt die Wärmeleitfähigkeit einer Metall-Glas-Zusammensetzung im Bereich 2,0 - 3,0 Wm-¹K⁻¹. Diese ist nicht viel höher als die Wärmeleitfähigkeit von YSZ. Das Vorsehen der anspruchsgemäßen Mischschicht ermöglicht ein sehr breites Intervall an Wärmeausdehnungskoeffizienten (α) von Metall-Glas- oder Keramik-Glas-Zusammensetzungen. Durch Änderung der Glaszusammensetzung und/oder des Metall-Glas-/Keramik-Glas-Verhältnisses gelingt eine Anpassung an den Ausdehnungskoeffizienten des Substrats. Silikatgläser mit unterschiedlichen Zusammensetzungen bilden eine permanente
α-Reihe von z.B., 2-3 bis 20-25x10⁻⁶K⁻¹. Durch diese Eigenschaft der Gläser ist eine gute α- Anpassung von Substraten, Metallglas- Schichten und YSZ- wärmedämmende Schichten mit Glasphase relativ leicht erreichbar. Im folgenden wird die Erfindung anhand von Beispielen näher erläutert.

Im folgenden wird die Erfindung anhand von Beispielen näher erläutert.

### Beispiel 1

Das Substrat besteht aus der Ni-Superlegierung IN-738. Hierauf ist eine 50-100 µm dicke MCrAlY-Legierung der Zusammensetzung Co-31, Cr-30, Ni-29,7, A1-8, Si-0,7, Y-0,8 (Angaben in Masse-%) als Zwischenschicht (Bondcoat) aufgebracht. Auf der Zwischenschicht befindet sich als wärmedämmende Schicht der Zusammensetzung Metall-Glas 63:37 (Masse-%). Als Metall ist die bei der Zwischenschicht verwendete Legierung eingesetzt. Als Glas ist ein Alkali-Kalk-Silikatglas der Zusammensetzung SiO₂-70, Na₂O-17, CaO-8, MgO-2, Al₂O₃-3 (Angaben in Masse-%) vorgesehen. Die wärmedämmende Schicht ist 500 µm dick. Dieses Beispiel eignet sich insbesondere für den Einsatz bei Betriebstemperaturen von 1000 bis 1200 °C. Durch die Zwischenschicht werden Diffusionseffekte vermieden, die ohne die Zwischenschicht im vorgenannten Temperaturbereich zwischen dem Substrat und der wärmedämmenden Schicht in einem schädigenden Umfang auftreten würden. Der Mehraufwand aufgrund des Vorsehens einer Zwischenschicht wird durch die vorgenannte Wirkung gerechtfertigt.
Die Ausdehnungskoeffizienten des Substrates und der wärmedämmenden Schicht betragen ca. 14•10⁻⁶ K⁻¹. Sie stimmen bis zu einer Temperatur von 800 °C sehr gut überein. Der Ausdehnungskoeffizient der metallischen Zwischenschicht beträgt zwar ca. 17•10⁻⁶ K⁻¹. Die Differenz ist jedoch unkritisch, da sich die Zwischenschicht plastisch verhält und sehr dünn ist.

### Beispiel 2

Substrat und Zwischenschicht stimmen mit dem Beispiel 1 überein. Die wärmedämmende Schicht auf der Zwischenschicht weist 85 Masse-% YSZ und 15 Masse-% Glas auf. Das Glas setzt sich gemäß SiO₂-60, Rb₂O-20, CaO-20 (Angaben in Masse-%) zusammen. Die wärmedämmende Schicht ist 300 µm dick.
Der Ausdehnungskoeffizient der wärmedämmenden Schicht stimmt besser (im Vergleich zu einer ausschließlich aus YSZ bestehenden Schicht) mit dem des Substrats überein. Die bei Beispiel 1 erzielte Übereinstimmung der Ausdehnungskoeffizienten wird hier jedoch nicht erreicht.

### Beispiel 3

Das Beispiel 3 entspricht dem Beispiel 1 ohne Vorsehen der Zwischenschicht. Der Aufbau ist einfacher. Er ist jedoch bei Umgebungstemperaturen oberhalb von 1000 °C weniger geeignet, da dann Diffusionseffekte schädigend wirken.

Versuche an den Beispielen 1 bis 3 zeigten ein verbessertes Oxidationsverhalten, eine größere thermische Stabilität bei vergleichbaren wärmedämmenden Eigenschaften im Vergleich zum eingangs genannten Stand der Technik.

## Patentansprüche

1. Substrat mit einer aufgebrachten wärmedämmenden Schicht,
**dadurch gekennzeichnet,**
**dass** die wärmedämmende Schicht zu 10-90 Masse-% aus Glas und darüber hinaus aus einer Keramik und/oder einem Metall und/oder einer Metalllegierung besteht und die wärmedämmende Schicht durch eine metallische Schicht vom Substrat getrennt ist.

2. Substrat nach vorhergehendem Anspruch, bei dem als Substrat Gasturbinenteile, -schaufeln sowie Platten von Brennkammern vorgesehen sind.

3. Substrat nach einem der vorhergehenden Ansprüche, bei dem die Oberflächen des Substrats, die während eines Betriebes heißer Umgebungsluft ausgesetzt sind, vollständig durch die wärmedämmende Schicht bedeckt sind.

4. Substrat nach einem der vorhergehenden Ansprüche, bei dem als Glas Silikatgläser vorgesehen sind.

5. Substrat nach einem der vorhergehenden Ansprüche, bei dem das Substrat aus einer Ni-Superlegierung besteht.

6. Substrat nach einem der vorhergehenden Ansprüche, bei dem als Keramik YSZ und/oder ZrO₂ eingesetzt sind.

7. Verwendung eines Substrats nach einem der vorhergehenden Ansprüchen bei Betriebstemperaturen oberhalb von 800°C.

8. Verwendung eines Substrats nach Anspruch 7, bei Temperaturen oberhalb von 1000 °C.

## Claims

1. Substrate with a heat-insulating layer applied thereon,
**characterized in that**
the heat-insulating layer comprises 10-90% by mass of glass and, in addition, a ceramic and/or a metal and/or a metal alloy, and the heat-insulating layer is separated from the substrate by a metallic layer.

2. Substrate according to the preceding claim, gas turbine parts, gas turbine blades and also plates of combustion chambers being provided as the substrate.

3. Substrate according to one of the preceding claims, the surfaces of the substrate that are exposed to hot ambient air during operation being completely covered by the heat-insulating layer.

4. Substrate according to one of the preceding claims, silica glasses being provided as the glass.

5. Substrate according to one of the preceding claims, the substrate consisting of a Ni superalloy.

6. Substrate according to one of the preceding claims, YSZ and/or ZrO₂ being used as the ceramic.

7. Use of a substrate according to one of the preceding claims at operating temperatures above 800°C.

8. Use of a substrate according to Claim 7 at temperatures above 1000°C.

## Revendications

1. Substrat doté d'une couche d'isolation thermique aménagée, **caractérisée en ce que** la couche d'isolation thermique est constituée de 10 à 90 % en masse de verre et en outre, de céramique et/ou d'un métal et/ou d'un alliage de métaux, et **en ce que** la couche d'isolation thermique est séparée du substrat par une couche métallique.

2. Substrat selon la revendication précédente, pour lequel sont utilisées comme substrat, des pièces de turbine à gaz, des ailettes de turbine à gaz ainsi que des plaques de chambre de combustion.

3. Substrat selon l'une quelconque des revendications précédentes, dans lequel les surfaces du substrat qui sont exposées à l'air ambiant chaud pendant un fonctionnement sont complètement recouvertes par la couche d'isolation thermique.

4. Substrat selon l'une quelconque des revendications précédentes, dans lequel sont prévus comme verre, des verres de silice.

5. Substrat selon l'une quelconque des revendications précédentes, dans lequel le substrat est constitué d'un superalliage de nickel.

6. Substrat selon l'une quelconque des revendications précédentes, dans lequel sont utilisés comme céramique les YSZ et/ou ZrO₂.

7. Utilisation d'un substrat selon l'une quelconque des revendications précédentes à des températures de fonctionnement supérieures à 800°C.

8. Utilisation d'un substrat selon la revendication 7, à des températures de fonctionnement supérieures à 1000°C.
